(19) Europäisches Patentamt
European Patent Office
Office européen des brevets

(11) **EP 4 613 590 A1**

(12) **EUROPEAN PATENT APPLICATION**
published in accordance with Art. 153(4) EPC

(43) Date of publication:
**10.09.2025 Bulletin 2025/37**

(51) International Patent Classification (IPC):
***B60W 30/06*** (2006.01)

(21) Application number: 23895993.6

(22) Date of filing: **29.06.2023**

(52) Cooperative Patent Classification (CPC):
**B62D 15/027; B60W 30/06; B60W 30/09;
B62D 1/00; H04L 1/22; H04L 67/12**

(86) International application number:
**PCT/CN2023/103726**

(87) International publication number:
**WO 2024/113829 (06.06.2024 Gazette 2024/23)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.11.2022 CN 202211522452**

(71) Applicant: **Shenzhen Yinwang Intelligent
Technologies Co., Ltd.
Shenzhen, Guangdong 518129 (CN)**

(72) Inventors:
• **ZHANG, Jiaxu**
**Shenzhen, Guangdong 518129 (CN)**
• **WANG, Xinyu**
**Shenzhen, Guangdong 518129 (CN)**
• **ZHANG, Yu**
**Shenzhen, Guangdong 518129 (CN)**

(74) Representative: **Thun, Clemens
Mitscherlich PartmbB
Patent- und Rechtsanwälte
Karlstraße 7
80333 München (DE)**

(54) **PARKING METHOD AND DEVICE AND VEHICLE**

(57)     A parking method is provided, including: obtaining failure indication information when a vehicle is controlled, based on parking control information received from a mobile terminal, to park in or pull out of a parking space, where the failure indication information indicates that at least one of a remote control function of the mobile terminal, a communication network of the vehicle, and a parking-related actuator of the vehicle fails (S401); and controlling, based on the failure indication information, the vehicle to brake (S402). The method may be applied to an autonomous driving vehicle such as an intelligent vehicle or an electric vehicle. When a function fails in a remote parking process, the vehicle can brake in a timely manner, to ensure vehicle safety in the parking process. A parking apparatus, a vehicle, a computer-readable storage medium, and a chip are further disclosed.

**400**

S401: Obtain failure indication information when a vehicle is controlled, based on parking control information received from a mobile terminal, to park in or pull out of a parking space, where the failure indication information indicates that at least one of a remote control function of the mobile terminal, a communication network of the vehicle, and a parking-related actuator of the vehicle fails

S402: Control, based on the failure indication information, the vehicle to brake

FIG. 4

## Description

This application claims priority to Chinese Patent Application No. 202211522452.7, filed with the China National Intellectual Property Administration on November 30, 2022 and entitled "PARKING METHOD AND APPARATUS, AND VEHICLE", which is incorporated herein by reference in its entirety.

## TECHNICAL FIELD

This application relates to the field of intelligent vehicles, and in particular, to a parking method and apparatus, and a vehicle.

## BACKGROUND

With rapid development of the vehicle industry, many assisted driving and autonomous driving technologies are generated, to reduce driving pressure, and improve safety and convenience. In a current technical background, when a user performs remote parking by using a remote parking assist (remote parking assist, RPA) technology, a function of an RPA system may fail. When the foregoing situation occurs, the user outside a vehicle cannot directly take over the vehicle by using a steering wheel, a throttle, a brake mechanism, or the like to ensure parking safety.

In view of this, a parking solution that can improve vehicle safety in a remote parking process needs to be developed urgently.

## SUMMARY

This application provides a parking method and apparatus, and a vehicle. When a function of a parking system fails in a remote parking process, the vehicle can brake in a timely manner, to ensure vehicle safety in the parking process.

According to a first aspect, a parking method is provided. The method may be performed by a vehicle, or may be performed by a computing platform disposed in the vehicle, or may be performed by a chip or a circuit used in the vehicle. This is not limited in this application.

The method provided in this application may be applied to the vehicle. The vehicle is a vehicle in a broad sense, and may be a transportation tool (for example, a commercial vehicle, a passenger vehicle, a truck, a motorcycle, an airplane, a flying vehicle, a train, or a ship), an industrial vehicle (for example, a forklift, a trailer, or a tractor), an engineering vehicle (for example, an excavator, a bulldozer, or a crane), an agricultural device (for example, a lawn mower or a harvester), a recreation device, a toy vehicle, or the like. A type of the vehicle is not specifically limited in this application.

The method includes: obtaining failure indication information when a vehicle is controlled, based on parking control information received from a mobile terminal, to park in or pull out of a parking space, where the failure indication information indicates that at least one of a remote control function of the mobile terminal, a communication network of the vehicle, and a parking-related actuator of the vehicle fails, and controlling, based on the failure indication information, the vehicle to brake.

In the foregoing technical solution, when a function fails during remote parking, the vehicle may be controlled to brake, to ensure parking safety. Particularly, in a long-range remote parking scenario, when a remote parking function fails, and a user cannot directly take over the vehicle by using a steering wheel, a throttle, a brake mechanism, or the like, vehicle safety can be ensured.

With reference to the first aspect, in some implementations of the first aspect, the communication network includes a first communication network between a remote parking controller and a central gateway control unit, and the controlling, based on the failure indication information, the vehicle to brake includes: when the failure indication information indicates that the first communication network fails, controlling, through a second communication network between the remote parking controller and the central gateway control unit, the vehicle to brake.

For example, the first communication network may be a controller area network (controller area network, CAN), and more specifically, may be an intelligent driving domain CAN subnet. The second communication network may be automotive Ethernet.

In the foregoing technical solution, the second communication network is set between the remote parking controller and the central gateway control unit as a redundancy backup of the first communication network, so that when the first communication network fails, the vehicle can be controlled through the second communication network to brake, to help ensure vehicle safety.

With reference to the first aspect, in some implementations of the first aspect, the communication network includes a third communication network between an intelligent remote control terminal system and the central gateway control unit, and the controlling, based on the failure indication information, the vehicle to brake includes: when the failure indication information indicates that the third communication network fails, controlling, through a fourth communication network between the intelligent remote control terminal system and the central gateway control unit, the vehicle to brake.

For example, the third communication network may be a CAN network, and more specifically, may be an information domain CAN subnet. The fourth communication network may be automotive Ethernet.

In the foregoing technical solution, the fourth communication network is set between the intelligent remote control terminal system and the central gateway control unit as a redundancy backup of the third communication network, so that when the third communication network fails, the vehicle can be controlled through the fourth communication network to brake, to help ensure vehicle safety.

With reference to the first aspect, in some implementations of the first aspect, the method further includes: when the failure indication information indicates that the remote control function of the mobile terminal fails, controlling, based on the failure indication information, the vehicle to enter a remote parking paused state, or when the failure indication information indicates that the communication network of the vehicle or the parking-related actuator of the vehicle or both fail, controlling, based on the failure indication information, the vehicle to enter a remote parking terminated state.

For example, the remote parking paused state is a state that may be restored to a remote parking operated state, and the remote parking terminated state indicates that current remote parking is terminated, and cannot be restored to the remote parking operated state.

In the foregoing technical solution, in a process of remote parking of the vehicle by using the mobile terminal, based on different failure causes, remote parking can be designed and implemented to enter a pause or terminated state, to decouple control of the vehicle by the mobile terminal, so that the vehicle can implement braking. This resolves a problem that the vehicle is out of control when the remote parking function fails.

With reference to the first aspect, in some implementations of the first aspect, after the controlling the vehicle to enter a remote parking paused state, the method further includes: controlling the vehicle to adjust from the remote parking paused state to the remote parking terminated state; or controlling, based on first indication information, the vehicle to adjust from the remote parking paused state to a remote parking operated state, where the first indication information indicates that the remote control function of the mobile terminal is restored.

In some possible implementations, the first indication information is received within preset duration, and the first indication information indicates that the remote control function of the mobile terminal is restored. The vehicle is controlled, based on the first indication information, to change from the remote parking paused state to the remote parking operated state.

For example, the preset duration may be 10 seconds, or may be 5 seconds, or may be other duration.

With reference to the first aspect, in some implementations of the first aspect, the method further includes: sending first notification information to the mobile terminal, where the first notification information indicates a remote parking status.

Optionally, the first notification information indicates that the remote parking status is the remote parking paused state or the remote parking terminated state.

In the foregoing technical solution, when a function of a parking system fails, the first notification information is sent to the mobile terminal, so that the user can learn of a current status of the parking system, and then perform an operation of restoring the remote control function of the mobile terminal or an operation of taking over the vehicle. This improves parking efficiency.

With reference to the first aspect, in some implementations of the first aspect, the method further includes: receiving braking indication information sent by the mobile terminal in response to a first operation of a user; and controlling, based on the braking indication information, the vehicle to brake.

For example, the first operation may be that the user taps a related key that is of the mobile terminal and that is used for vehicle parking or braking.

For example, the braking indication information may be received when a distance between the vehicle and an obstacle is less than or equal to a preset distance.

In the foregoing technical solution, in a process of remote parking by using the mobile terminal, the user is used as a "redundancy backup" of the parking system. When the function of the parking system does not fail, but the user considers that it is necessary to pause parking, the user is supported to control, based on a personal will, the vehicle to brake.

With reference to the first aspect, in some implementations of the first aspect, before the receiving braking indication information sent by the mobile terminal in response to a first operation of a user, the method further includes: sending information about an obstacle around the vehicle to the mobile terminal, where the information about the obstacle indicates a distance between the obstacle around the vehicle and the vehicle.

In the foregoing technical solution, in a process in which the user controls, by using the mobile terminal, the vehicle to park, the information about the obstacle around the vehicle is sent to the mobile terminal, so that the user can determine an accurate location of the obstacle around the vehicle. This can resolve a problem that a visual blind spot exists in a process in which the user performs parking by using RPA, and the accurate location of the obstacle can enable the user to accurately determine a subsequent parking operation, to improve efficiency of remote parking.

With reference to the first aspect, in some implementations of the first aspect, the method further includes: when the distance between the obstacle and the vehicle is less than or equal to a preset distance, controlling the vehicle to brake.

In the foregoing technical solution, when the distance between the vehicle and the obstacle is excessively close, the vehicle automatically brakes, so that a problem that the vehicle is scratched due to a visual blind spot in a process in which the user performs parking by using RPA can be resolved.

With reference to the first aspect, in some implementations of the first aspect, that the remote control function of the mobile terminal fails includes at least one of the following: the mobile terminal exits a monitoring interface, where the monitoring interface is used to display a process in which the vehicle is controlled to park in or pull out of the parking space; a virtual key that is of the mobile terminal and that is used to control the vehicle to park in or pull out of the parking space is stuck; and a key that is of the mobile terminal and that is used to control the vehicle to park in or pull out of the parking space is out of control.

According to a second aspect, a parking method is provided. The method may be performed by a mobile terminal, or may be performed by a chip or a circuit used in a mobile terminal. This is not limited in this application.

The mobile terminal in this application may include various handheld devices, wearable devices, computing devices that have a wireless communication function, or other processing devices connected to a wireless modem, and various forms of terminals, mobile stations, user equipment, and the like. This is not limited in embodiments of this application.

The method includes: receiving information about an obstacle around a vehicle when the vehicle is controlled, by using a mobile terminal, to park in or pull out of a parking space, where the information about the obstacle indicates a distance between the obstacle around the vehicle and the vehicle; and displaying information about the obstacle based on the information about the obstacle.

In the foregoing technical solution, in a process in which a user controls, by using the mobile terminal, the vehicle to park, the mobile terminal can display the information about the obstacle around the vehicle in real time, so that the user can determine an accurate location of the obstacle around the vehicle. This can resolve a problem that a visual blind spot exists in a process in which the user performs parking by using RPA, and the accurate location of the obstacle can enable the user to accurately determine a subsequent parking operation, to improve efficiency of remote parking.

With reference to the second aspect, in some implementations of the second aspect, the information about the obstacle includes an image of a surrounding environment of the vehicle and/or the distance between the obstacle and the vehicle, where the image of the surrounding environment includes an image of the obstacle.

With reference to the second aspect, in some implementations of the second aspect, the method further includes: receiving first notification information sent by the vehicle, where the first notification information indicates that a remote parking status is a remote parking paused state or a remote parking terminated state; and displaying the remote parking status based on the first notification information.

In the foregoing technical solution, when a function of a parking system fails, the remote parking status is displayed based on the first notification information, so that the user can learn of a current status of the parking system, and then perform an operation of restoring a remote control function of the mobile terminal or an operation of taking over the vehicle. This improves parking efficiency.

According to a third aspect, a parking method is provided. The method may be performed by a mobile terminal, or may be performed by a chip or a circuit used in a mobile terminal. This is not limited in this application.

The method includes: sending first failure indication information to a vehicle when the vehicle is controlled, by using a mobile terminal, to park in or pull out of a parking space and a remote control function of the mobile terminal fails, where the first failure indication information is used to control the vehicle to brake.

For example, the failure indication information may include the first failure indication information.

According to a fourth aspect, a parking method is provided. The method may be performed by a cloud server, or may be performed by a chip or a circuit used in a cloud server. This is not limited in this application.

The method includes: sending second failure indication information to a vehicle when the vehicle is controlled, by using a mobile terminal, to park in or pull out of a parking space and a communication network of the vehicle fails, where the second failure indication information is used to control the vehicle to brake.

For example, the failure indication information may include the second failure indication information.

According to a fifth aspect, a parking apparatus is provided. The apparatus includes an obtaining unit and a processing unit, and the obtaining unit is configured to: obtain failure indication information when a vehicle is controlled, based on parking control information received from a mobile terminal, to park in or pull out of a parking space, where the failure indication information indicates that at least one of a remote control function of the mobile terminal, a communication network of the vehicle, and a parking-related actuator of the vehicle fails, and the processing unit is configured to control, based on the failure indication information, the vehicle to brake.

With reference to the fifth aspect, in some implementations of the fifth aspect, the communication network includes a first communication network between a remote parking controller and a central gateway control unit, and the processing unit is configured to: when the failure indication information indicates that the first communication network fails, control, through a second communication network between the remote parking controller and the central gateway control unit, the vehicle to brake.

With reference to the fifth aspect, in some implementations of the fifth aspect, the communication network includes a third communication network between an intelligent remote control terminal system and the central gateway control unit, and the processing unit is configured to: when the failure indication information indicates that the third communication network fails, control, through a fourth communication network between the intelligent remote control terminal system and the central gateway control unit, the vehicle to brake.

With reference to the fifth aspect, in some implementations of the fifth aspect, the processing unit is further configured to: when the failure indication information indicates that the remote control function of the mobile terminal fails, control, based on the failure indication information, the vehicle to enter a remote parking paused state, or when the failure indication information indicates that the communication network of the vehicle or the parking-related actuator of the vehicle or both fail, control, based on the failure indication information, the vehicle to enter a remote parking terminated state.

With reference to the fifth aspect, in some implementations of the fifth aspect, after the controlling the vehicle to enter a remote parking paused state, the processing unit is further configured to: control the vehicle to adjust from the remote parking paused state to the remote parking terminated state; or control, based on first indication information, the vehicle to adjust from the remote parking paused state to a remote parking operated state, where the first indication information indicates that the remote control function of the mobile terminal is restored.

With reference to the fifth aspect, in some implementations of the fifth aspect, the obtaining unit is further configured to: send first notification information to the mobile terminal, where the first notification information indicates a remote parking status.

With reference to the fifth aspect, in some implementations of the fifth aspect, the obtaining unit is further configured to: receive braking indication information sent by the mobile terminal in response to a first operation of a user; and the processing unit is further configured to control, based on the braking indication information, the vehicle to brake.

With reference to the fifth aspect, in some implementations of the fifth aspect, before the receiving braking indication information sent by the mobile terminal in response to a first operation of a user, the obtaining unit is further configured to: send information about an obstacle around the vehicle to the mobile terminal, where the information about the obstacle indicates a distance between the obstacle around the vehicle and the vehicle.

With reference to the fifth aspect, in some implementations of the fifth aspect, the processing unit is further configured to: when the distance between the obstacle and the vehicle is less than or equal to a preset distance, control the vehicle to brake.

With reference to the fifth aspect, in some implementations of the fifth aspect, that the remote control function of the mobile terminal fails includes at least one of the following: the mobile terminal exits a monitoring interface, where the monitoring interface is used to display a process in which the vehicle is controlled to park in or pull out of the parking space; a virtual key that is of the mobile terminal and that is used to control the vehicle to park in or pull out of the parking space is stuck; and a key that is of the mobile terminal and that is used to control the vehicle to park in or pull out of the parking space is out of control.

According to a sixth aspect, a parking apparatus is provided. The apparatus includes a transceiver unit and a processing unit, and the transceiver unit is configured to: receive information about an obstacle around a vehicle when the vehicle is controlled, by using a mobile terminal, to park in or pull out of a parking space, where the information about the obstacle indicates a distance between the obstacle around the vehicle and the vehicle; and the processing unit is configured to display information about the obstacle based on the information about the obstacle.

With reference to the sixth aspect, in some implementations of the sixth aspect, the information about the obstacle includes an image of a surrounding environment of the vehicle and/or the distance between the obstacle and the vehicle, where the image of the surrounding environment includes an image of the obstacle.

With reference to the sixth aspect, in some implementations of the sixth aspect, the transceiver unit is further configured to: receive first notification information sent by the vehicle, where the first notification information indicates that a remote parking status is a remote parking paused state or a remote parking terminated state; and the processing unit is further configured to display the remote parking status based on the first notification information.

According to a seventh aspect, a parking apparatus is provided, and the apparatus includes: a transceiver unit, configured to send first failure indication information to a vehicle when the vehicle is controlled, by using a mobile terminal, to park in or pull out of a parking space and a remote control function of the mobile terminal fails, where the first failure indication information is used to control the vehicle to brake.

According to an eighth aspect, a parking apparatus is provided, and the apparatus includes: a transceiver unit, configured to send second failure indication information to a vehicle when the vehicle is controlled, by using a mobile terminal, to park in or pull out of a parking space and a communication network of the vehicle fails, where the second failure indication information is used to control the vehicle to brake.

According to a ninth aspect, a parking apparatus is provided, and the apparatus includes: a memory, configured to store a computer program; and a processor, configured to execute the computer program stored in the memory, to enable the apparatus to perform the method according to any one of the possible implementations of the first aspect to the fourth aspect.

According to a tenth aspect, a vehicle is provided, and the vehicle includes the apparatus according to any one of the possible implementations of the fifth aspect.

According to an eleventh aspect, a mobile terminal is provided, and the mobile terminal includes the apparatus according to any one of the possible implementations of the sixth aspect or the seventh aspect.

According to a twelfth aspect, a server is provided, and the server includes the apparatus according to any one of the possible implementations of the eighth aspect.

According to a thirteenth aspect, a parking system is provided, and the system includes the vehicle according to any one of the possible implementations of the tenth aspect and the mobile terminal according to any one of the possible implementations of the eleventh aspect; or the system includes the vehicle according to any one of the possible implementations of the tenth aspect, the mobile terminal according to any one of the possible implementations of the eleventh aspect, and the server according to any one of the possible implementations of the twelfth aspect.

According to a fourteenth aspect, a computer program product is provided, and the computer program product includes computer program code. When the computer program code is run on a computer, the computer is enabled to perform the method according to any one of the possible implementations of the first aspect to the fourth aspect.

It should be noted that all or some of the computer program code may be stored in a first storage medium. The first storage medium may be encapsulated together with a processor, or may be encapsulated separately from a processor.

According to a fifteenth aspect, a computer-readable medium is provided, and the computer-readable medium stores instructions. When the instructions are executed by a processor, the processor is enabled to implement the method according to any one of the possible implementations of the first aspect or the fourth aspect.

According to a sixteenth aspect, a chip is provided, the chip includes a circuit, and the circuit is configured to perform the method according to any one of the possible implementations of the first aspect to the fourth aspect.

## BRIEF DESCRIPTION OF DRAWINGS

FIG. 1 is a functional block diagram of a vehicle according to an embodiment of this application;

FIG. 2 is a diagram of sensing ranges of various sensors according to an embodiment of this application;

FIG. 3 is a diagram of a system architecture required for implementing a parking method according to an embodiment of this application;

FIG. 4 is a schematic flowchart of a parking method according to an embodiment of this application;

FIG. 5 is a diagram in which a remote parking status changes according to an embodiment of this application;

FIG. 6 is a diagram of a communication framework required in a parking process according to an embodiment of this application;

FIG. 7 is a diagram of a 360-degree surround view layer, a raster layer, and fusion thereof according to an embodiment of this application;

FIG. 8 is another schematic flowchart of a parking method according to an embodiment of this application;

FIG. 9 is a block diagram of a parking apparatus according to an embodiment of this application;

FIG. 10 is a block diagram of another parking apparatus according to an embodiment of this application; and

FIG. 11 is a block diagram of still another parking apparatus according to an embodiment of this application.

## DESCRIPTION OF EMBODIMENTS

In the descriptions of embodiments of this application, "/" means "or" unless otherwise specified. For example, A/B may represent A or B. In this specification, "and/or" describes an association relationship between associated objects and represents that three relationships may exist. For example, A and/or B may represent the following three cases. Only A exists, both A and B exist, and only B exists. In this application, "at least one" means one or more, and "a plurality of" means two or more. "At least one of the following items (pieces)" or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

In embodiments of this application, prefixes such as "first" and "second" are used only to distinguish different described objects, and do not limit a location, a sequence, a priority, a quantity, or content of described objects. In embodiments of this application, use of a prefix word, for example, an ordinal number, used to distinguish between described objects does not constitute a limitation on the described objects. For descriptions of the described objects, refer to the descriptions of the context in the claims or embodiments. The use of such a prefix word should not constitute a redundant limitation.

As described above, with rapid development of the vehicle industry, many assisted driving and autonomous driving technologies are generated, to reduce driving pressure, and improve safety and convenience. In the assisted driving technologies, RPA is an advanced parking solution developed based on an automatic parking assist (automatic parking assist, APA) technology. In RPA, a user can monitor and control, outside a vehicle by using a mobile terminal such as a mobile phone, the vehicle to complete a parking operation. This effectively resolves a problem that a passenger in a vehicle in a narrow parking space cannot get on or off the vehicle. However, in a running process of an RPA system, a function failure (or referred to as a failure) may occur. When the foregoing situation occurs, the user outside the vehicle cannot directly take over the vehicle by using a steering wheel, a throttle, a brake mechanism, or the like to ensure parking safety. In addition, a visual blind spot exists in a process in which the user performs parking by using RPA, and a problem that the vehicle is scratched by an obstacle may occur in the parking process. In some current technologies, obstacle detection and collision warning may be performed by using a sensor such as a radar or a camera apparatus. However, the problem of the visual blind spot is still not resolved, and the user still cannot determine an accurate location of the obstacle around the vehicle, and cannot accurately determine a subsequent parking operation. Consequently, remote parking efficiency is low.

In view of this, this application provides a parking method and apparatus, and a vehicle. A backup communication network is set for an information domain CAN subnet and an intelligent driving domain CAN subnet, so that when the information domain CAN subnet and the intelligent driving domain CAN subnet fail, a parking control instruction can continue to be transmitted through the backup communication network, to control an actuator of a vehicle. This implements braking to stop, to ensure vehicle safety. In addition, the parking method in this application provides a visualized parking interface for a user, so that the user can determine an accurate location of an obstacle around the vehicle in a remote parking process, to reduce impact of a visual blind spot on remote parking efficiency.

The following describes technical solutions of embodiments in this application with reference to accompanying drawings.

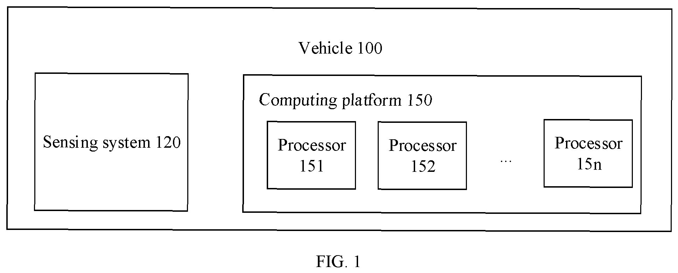

FIG. 1 is a functional block diagram of a vehicle 100 according to an embodiment of this application. The vehicle 100 may include a sensing system 120 and a computing platform 150. The sensing system 120 may include several types of sensors that sense information about a surrounding environment of the vehicle 100. For example, the sensing system 120 may include a positioning system. The positioning system may be a global positioning system (global positioning system, GPS), or may be one or more of a BeiDou system or another positioning system, an inertial measurement unit (inertial measurement unit, IMU), a lidar, a millimeter-wave radar, an ultrasonic radar, or a camera apparatus.

Some or all functions of the vehicle 100 may be controlled by the computing platform 150. The computing platform 150 may include processors 151 to 15n (n is a positive integer). The processor is a circuit having a signal processing capability. In an implementation, the processor may be a circuit having an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function based on a logical relationship of a hardware circuit. The logical relationship of the hardware circuit is fixed or reconfigurable. For example, the processor is a hardware circuit implemented by an application-specific integrated circuit (application-specific integrated circuit, ASIC) or a programmable logic device (programmable logic device, PLD), for example, a field programmable gate array (field programmable gate array, FPGA). In the reconfigurable hardware circuit, a process in which the processor loads a configuration document to implement hardware circuit configuration may be understood as a process in which the processor loads instructions to implement functions of some or all of the foregoing units. In addition, the circuit may be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). In addition, the computing platform 150 may further include a memory. The memory is configured to store instructions. Some or all of the processors 151 to 15n may invoke the instructions in the memory to execute the instructions, to implement a corresponding function.

The vehicle 100 may include an advanced driver-assistance system (advanced driving assistant system, ADAS). The ADAS obtains information around the vehicle by using a plurality of sensors (including but not limited to a lidar, a millimeter-wave radar, a camera apparatus, an ultrasonic sensor, a global positioning system, and an inertial measurement unit) in the sensing system 120, and analyzes and processes the obtained information, to implement functions such as obstacle perceiving, target recognition, vehicle positioning, path planning, and driver monitoring/reminder. This improves safety, automation, and comfort of vehicle driving.

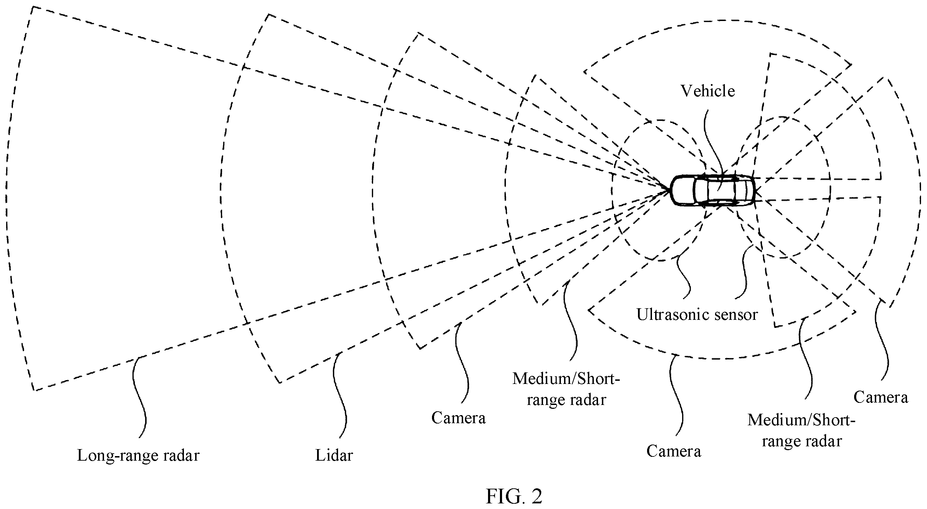

FIG. 2 is a diagram of sensing ranges of various sensors. The sensors may include, for example, the lidar, the millimeter-wave radar, the camera apparatus, and the ultrasonic sensor in the sensing system 120 shown in FIG. 1. The millimeter-wave radar may be classified into a long-range radar and a medium/short-range radar. Currently, a sensing range of the lidar is approximately 80 meters to 150 meters, a sensing range of the long-range millimeter-wave radar is approximately 1 meter to 250 meters, a sensing range of the medium/short-range millimeter-wave radar is approximately 30 meters to 120 meters, a sensing range of a camera is approximately 50 meters to 200 meters, and a sensing range of the ultrasonic radar is approximately 0 meters to 5 meters.

At different autonomous driving levels (LO to L5), an ADAS may implement different levels of autonomous driving assistance based on information obtained based on an artificial intelligence algorithm by using a plurality of sensors. The foregoing autonomous driving levels (LO to L5) are based on a grading standard of the society of automotive engineers (society of automotive engineers, SAE). The level L0 indicates no automation, the level L1 indicates driving support, the level L2 indicates partial automation, the level L3 indicates conditional automation, the level L4 indicates high automation, and the level L5 indicates full automation. Tasks of monitoring and responding to road conditions at the levels L1 to L3 are jointly completed by a driver and a system, and the driver needs to take over a dynamic driving task. At the levels L4 and L5, the driver may be completely transformed into a role of a passenger. Currently, functions that may be implemented by the ADAS mainly include but are not limited to: adaptive cruising, automatic emergency braking, automatic parking, blind spot monitoring, traffic warning/braking at a front crossroad, traffic warning/braking at a rear crossroad, front vehicle collision warning, lane deviation warning, lane keeping assistance, rear vehicle collision prevention warning, traffic sign recognition, traffic jam assistance, highway assistance, and the like. It should be understood that the foregoing functions may have specific modes at different autonomous driving levels (LO to L5). A higher autonomous driving level corresponds to a more intelligent mode.

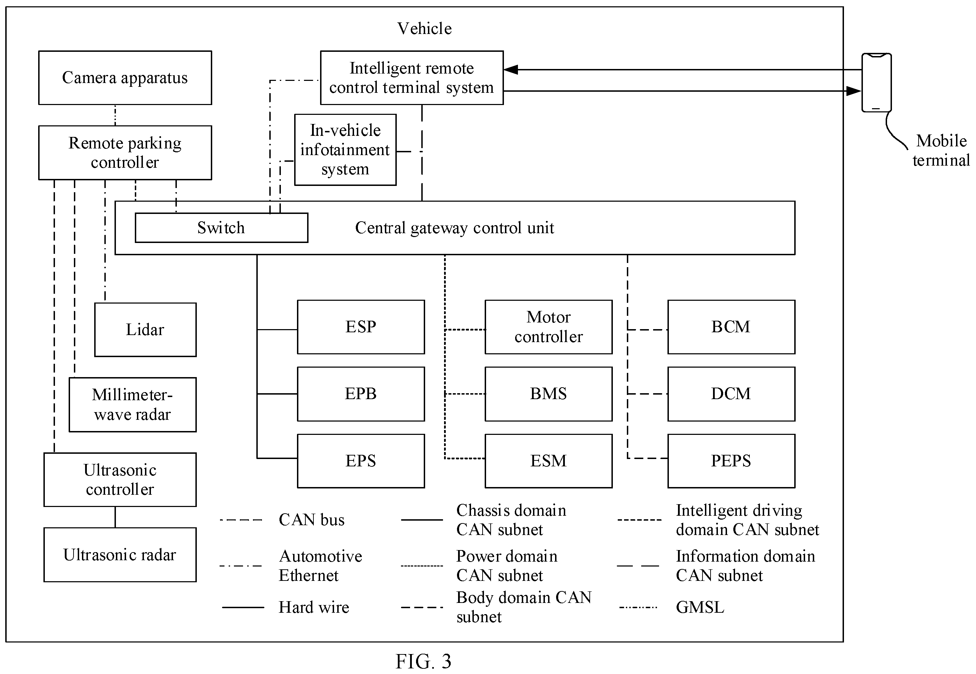

Before the parking method provided in embodiments of this application is described, a system architecture required for implementing the parking method provided in embodiments of this application is first described with reference to FIG. 3.

FIG. 3 is a diagram of a system architecture required for implementing a parking method. The system includes a vehicle and a mobile terminal. For example, the vehicle may include the vehicle 100 shown in FIG. 1. The vehicle includes a central gateway control unit, a chassis control domain, a power control domain, a body control domain, a sensing module, a remote parking controller, and an intelligent remote control terminal. The central gateway control unit communicates with an electronic stability program (electronic stability program, ESP), an electronic parking brake (electronic park brake, EPB), and an electronic power steering (electronic power steering, EPS) control unit in the chassis control domain through a chassis domain CAN subnet. The central gateway control unit communicates with a motor controller, a battery management system (battery management system, BMS), and an electronic selector module (electronic selector module, ESM) in the power control domain through a power domain CAN subnet. The central gateway control unit communicates with a body control module (body control module, BCM) and a door control module (door control module, DCM) in the body control domain through a body domain CAN subnet. The central gateway control unit communicates with the remote parking controller through an intelligent driving domain (briefly referred to as an intelligent driving domain) CAN subnet. The remote parking controller communicates with a millimeter-wave radar and a controller (namely, an ultrasonic controller) of an ultrasonic radar in the sensing module through a CAN bus, communicates with a lidar in the sensing module through automotive Ethernet, and communicates with a camera apparatus through a gigabit multimedia serial link (gigabit multimedia serial link, GMSL) bus. In a remote parking process, the remote parking controller communicates with sensors in the sensing module to obtain information about a distance between an obstacle around the vehicle and the vehicle. The central gateway control unit communicates with an intelligent remote control terminal system and an in-vehicle infotainment system through an information domain CAN subnet. The intelligent remote control terminal system may communicate with the mobile terminal through a wireless communication system, receive a remote parking-related instruction sent by the mobile terminal, and send a remote parking-related notification to the mobile terminal. The wireless communication system may include a radio frequency identification (radio frequency identification, RFID) module, an ultra-wide band (ultra-wide band, UWB) module, Bluetooth low energy (Bluetooth low energy, BLE), a wireless short-range communication system (for example, an in-vehicle wireless short-range communication system), a fourth generation (4th Generation, 5G) communication system, a fifth generation (5th Generation, 5G) communication system, and the like.

It should be noted that, a network management algorithm and a packet byte checksum algorithm are deployed in the central gateway control unit, to monitor a communication status of each CAN subnet, and the network management algorithm is deployed in the intelligent remote control terminal system and a mobile terminal side, to monitor a status of a wireless network communication. The central gateway control unit further includes a switch, and the switch communicates with the remote parking controller, the intelligent remote control terminal system, and the in-vehicle infotainment system through the automotive Ethernet. In this way, when a function of the intelligent driving domain CAN subnet fails, the remote parking controller can still communicate with the central gateway control unit, and when a function of the information domain CAN subnet fails, the intelligent remote control terminal system and the in-vehicle infotainment system can still communicate with the central gateway control unit. In addition, a functional safety thread is deployed in the remote parking controller, to monitor whether functions of power, braking, and steering subsystems of the vehicle are implemented. A redundancy backup is set for the ESP and the EPB, so that in a remote parking process, when a function of braking to stop of the ESP fails, the EPB can still be used to control to perform parking braking, or when a parking braking function of the EPB fails, the ESP can still be used to control to perform braking to stop. A redundancy backup is set for the chassis domain CAN subnet and the power domain CAN subnet, so that when a function of the chassis domain CAN subnet fails, the motor controller connected to the power domain CAN subnet can be used to control to perform braking to stop.

It may be understood that the ESP may brake a wheel of the vehicle, to reduce a speed of the vehicle to zero, so that braking to stop is implemented. After controlling the vehicle to perform braking to stop, the EPB may perform parking braking on the vehicle. The motor controller may control an output torque, to reduce the speed of the vehicle to zero, so that braking to stop is implemented.

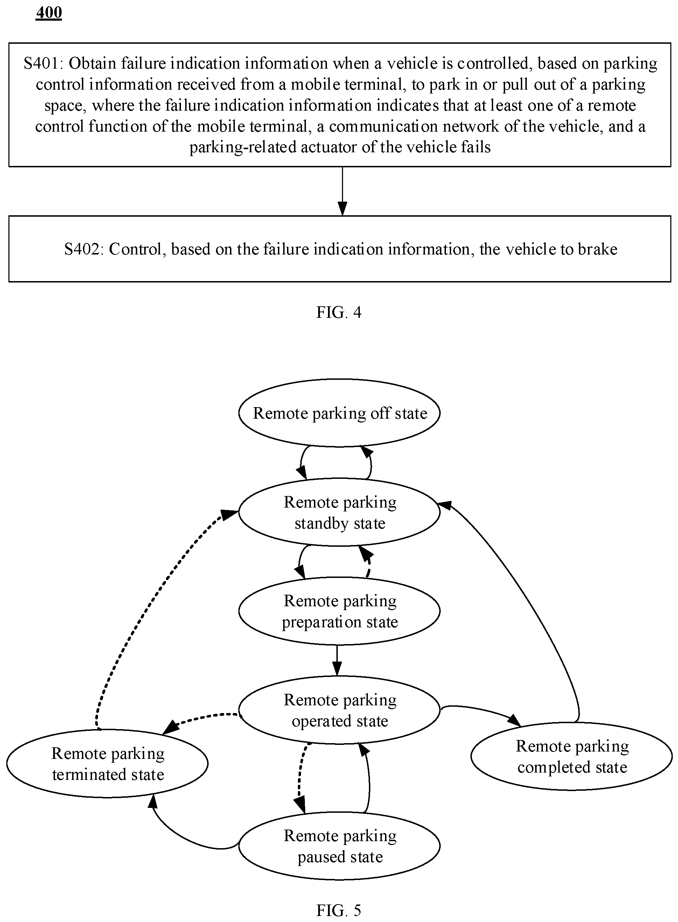

FIG. 4 is a schematic flowchart of a parking method according to an embodiment of this application. The method may be performed by the vehicle 100 shown in FIG. 1, or may be performed by the system shown in FIG. 3, or may be performed by a chip used in a vehicle. More specifically, the method may be performed by a central gateway control unit, and the method 400 may include the following steps.

S401: Obtain failure indication information in a process in which a vehicle is controlled, based on parking control information received from a mobile terminal, to park in or pull out of a parking space, where the failure indication information indicates that at least one of a remote control function of the mobile terminal, a communication network of the vehicle, and a parking-related actuator of the vehicle fails.

For example, the communication network of the vehicle includes an internal communication network of the vehicle, for example, at least one of an information domain CAN subnet, an intelligent driving domain CAN subnet, a chassis domain CAN subnet, a power domain CAN subnet, and a body domain CAN subnet; or the communication network of the vehicle may include an external communication network of the vehicle, for example, a communication network for communication between the vehicle and the mobile terminal. The parking-related actuator of the vehicle includes at least one of an ESP, an EPB, and a motor controller.

For example, that the remote control function of the mobile terminal fails includes at least one of the following: the mobile terminal exits a monitoring interface of remote parking; a virtual key that is on the mobile terminal side and that is used for remote parking is stuck; and a key that is on the mobile terminal side and that is used for remote parking is out of control. That the virtual key is stuck may be caused by continuous pressing of the virtual key due to a user accidentally touching a screen of the mobile terminal, or may be caused by another reason.

For example, the failure indication information may be sent by a cloud server. For example, when detecting that a communication function of the communication network of the vehicle fails, the cloud server sends, to the vehicle, failure indication information indicating that the communication network of the vehicle fails. Alternatively, the failure indication information may be sent by a monitoring system of the vehicle. For example, when detecting that a speed or a deceleration of the vehicle exceeds a preset threshold, the monitoring system of the vehicle sends, to the central gateway control unit of the vehicle, failure indication information indicating that the ESP fails; when detecting that a speed or a deceleration of the vehicle exceeds a preset threshold, the monitoring system of the vehicle sends, to the central gateway control unit of the vehicle, failure indication information indicating that the EPB of the vehicle fails; or when detecting that a speed or an acceleration of the vehicle exceeds a preset threshold, the monitoring system of the vehicle sends, to the central gateway control unit of the vehicle, failure indication information indicating that the motor controller of the vehicle fails. Alternatively, the failure indication information may be sent by the mobile terminal. For example, when the remote control function of the mobile terminal fails, failure indication information indicating that the remote control function of the mobile terminal fails is sent to the vehicle.

S402: Control, based on the failure indication information, the vehicle to brake.

Optionally, the vehicle may be controlled, by using at least one of the EPB, to brake, the EPS, and the motor controller. In some possible implementations, the mechanism used to control the vehicle to brake in the foregoing mechanisms is determined based on a failure position indicated by the failure indication information.

Optionally, after the vehicle is controlled to brake, the vehicle is controlled, based on the failure indication information, to enter a remote parking paused state or a remote parking terminated state.

Optionally, when the failure indication information indicates that the communication network of the vehicle or the parking-related actuator of the vehicle or both fail, the vehicle may be controlled, based on the failure indication information, to enter the remote parking terminated state.

Optionally, when the failure indication information indicates that the remote control function of the mobile terminal fails, the vehicle may be controlled, based on the failure indication information, to enter the remote parking paused state.

After the vehicle is controlled, based on the failure indication information, to enter the remote parking paused state, if a related failure problem is resolved within preset duration, that is, a normal function of a failed part is restored, the vehicle is controlled to change from the remote parking paused state to a remote parking operated state; or if a related failure problem is not resolved within preset duration, that is, a normal function of a failed part is not restored, the vehicle is controlled to change from the remote parking paused state to the remote parking terminated state.

For example, the preset duration may be 10 seconds, or may be 5 seconds, or may be other duration.

In some possible implementations, when the failure indication information indicates that a first communication network between the remote parking controller and the central gateway control unit fails, the vehicle is controlled, by using the central gateway control unit, to brake, the vehicle is controlled, through the second communication network between the remote parking controller and the central gateway control unit, to brake, and the second communication network is a backup communication network.

In some possible implementations, when the failure indication information indicates that a third communication network between the intelligent remote control terminal system and the central gateway control unit fails, a parking control instruction sent by the mobile terminal is transmitted through a fourth communication network between the intelligent remote control terminal system and the central gateway control unit, and the fourth communication network is a backup communication network. Further, the central gateway control unit controls the vehicle to brake, the central gateway control unit sends an instruction to the remote parking controller, and the remote parking controller controls to exit a remote parking procedure.

In some possible implementations, the method may further include: receiving braking indication information sent by the mobile terminal, and controlling, based on the braking indication information, the vehicle to brake. The braking indication information may be generated based on a distance between the vehicle and an obstacle around the vehicle, or may be generated by the user by tapping an operation of "stop parking" when the user observes, by using a parking interface of the mobile terminal, that the vehicle is excessively close to the obstacle around the vehicle.

According to the parking method provided in this embodiment of this application, in a design process of an architecture of a remote parking system, redundancy backup is performed on a vehicle braking function feature and a key communication network that needs to be used in remote parking, so that when a related component fails in a remote parking process of the vehicle, the parking control instruction can continue to be transmitted through the backup communication network, to control an actuator of the vehicle. This implements braking to stop, to ensure vehicle safety.

With reference to FIG. 5 and Table 1, the following describes in detail how to control, based on the failure indication information, the vehicle to brake in S402, and a state to which the remote parking status is controlled to change after vehicle braking, that is, a failure cause and a corresponding functional safety policy of the failure cause.

FIG. 5 is a diagram of a remote parking status of a parking system (or may be understood as a vehicle) and a change of the remote parking status. As shown in the figure, the remote parking status includes a remote parking off state, a remote parking standby state, a remote parking preparation state, the remote parking operated state, the remote parking terminated state, a remote parking completed state, and the remote parking paused state. In some possible implementations, when the mobile terminal used for remote parking is connected to the vehicle, the remote parking status changes from the remote parking off state to the remote parking standby state. Further, when an instruction indicating that a parking space for parking in has been selected or an instruction indicating that a direction for pulling out has been selected is received from the mobile terminal, the remote parking status changes from the remote parking standby state to the remote parking preparation state. When a remote parking instruction is received from the mobile terminal, the remote parking status changes from the remote parking preparation state to the remote parking operated state. If it is detected that a vehicle side and/or the mobile terminal side fails in a remote parking process, the remote parking controller of the vehicle controls, based on the failure cause, the remote parking status to change from the remote parking operated state to the remote parking paused state or the remote parking terminated state. If the vehicle completes parking, the remote parking status changes from the remote parking operated state to the remote parking completed state.

It should be noted that the states shown in FIG. 5 may be implemented by one state machine, or may be implemented in another manner. This is not specifically limited in this embodiment of this application. For example, the state machine may be disposed in the remote parking controller.

In some possible implementations, when the remote parking status is the remote parking standby state, a system check is performed on the parking system. After the system check is passed, the remote parking preparation state is entered based on an instruction sent by the mobile terminal. If the system check fails, remote parking is exited. For example, the instruction sent by the mobile terminal may be an instruction generated in response to tapping a "confirm to park" key by the user.

For example, the foregoing system check may include: normal communication between the vehicle and the mobile terminal; and a normal visualized vehicle status, that is, doors, a hood, and a trunk lid of the vehicle are all closed, and outer rear view mirrors are opened.

In some possible implementations, a type, a cause, and a corresponding functional safety policy to be adopted of a failure occurs in the parking system in a remote parking process are shown in Table 1. For example, whether communication between the mobile terminal and the vehicle fails may be determined by using a communication heartbeat monitoring algorithm; whether a CAN subnet in the vehicle fails is determined by using a network management algorithm and a packet byte checksum algorithm; whether the mobile terminal side fails is determined by using an application (application, APP) heartbeat monitoring algorithm; and whether an actuator of the vehicle fails is determined by detecting whether a speed, an acceleration, a deceleration, a pose, or the like of the vehicle exceeds a preset threshold.

Table 1: Functional safety policies to be adopted when a failure occurs in a remote parking process

| Failure type | Failure cause | Functional safety policy |
|---|---|---|
| A communication function fails | A communication function between a mobile terminal and a vehicle fails | An ESP or an EPB controls to perform braking to stop, remote parking enters a terminated state, and a notification is sent to a mobile terminal |
| | A communication function of an information domain CAN subnet fails | A parking control instruction sent by a mobile terminal is transmitted to a remote parking controller through automotive Ethernet, an ESP or an EPB controls to perform braking to stop, remote parking enters a terminated state, and a notification is sent to the mobile terminal |
| | A communication function of an intelligent driving domain CAN subnet fails | A remote parking controller performs parking control through automotive Ethernet, an ESP or an EPB controls to perform braking to stop, remote parking enters a terminated state, and a notification is sent to a mobile terminal |
| | A communication function of a chassis domain CAN subnet fails | A motor controller controls to perform braking to stop, remote parking enters a terminated state, and a notification is sent to a mobile terminal |
| | A communication function of a power domain CAN subnet fails | An ESP or an EPB controls to perform braking to stop, remote parking enters a terminated state, and a notification is sent to a mobile terminal |
| | A communication function of a body domain CAN subnet fails | An ESP or an EPB controls to perform braking to stop, remote parking enters a terminated state, and a notification is sent to a mobile terminal |
| A function of a mobile terminal side fails | A mobile terminal side exits a remote parking monitoring interface | An ESP controls to perform braking to stop, remote parking enters a paused state and a notification is sent to a mobile terminal, and if the mobile terminal side does not restore within preset duration, remote parking enters a terminated state |
| | A virtual key that is of a mobile terminal side and that is used for remote parking is stuck | An ESP controls to perform braking to stop, remote parking enters a paused state and a notification is sent to a mobile terminal, and if the mobile terminal side does not restore within preset duration, remote parking enters a terminated state |
| | A virtual key that is of a mobile terminal side and that is used for remote parking is out of control | In response to an operation of tapping a physical button of a mobile terminal by a user, remote parking enters a paused state, and if the mobile terminal side does not restore within preset duration, remote parking enters a terminated state |
| A function of an actuator fails | A function of an ESP fails | An EPB controls to perform braking to stop, remote parking enters a terminated state, and a notification is sent to a mobile terminal |
| | A function of a motor controller fails | An ESP controls to perform braking to stop, remote parking enters a terminated state, and a notification is sent to a mobile terminal |
| | A function of an EPS fails | An ESP controls to perform braking to stop, remote parking enters a terminated state, and a notification is sent to a mobile terminal |
| Collision risk | An obstacle collision risk is high | An ESP controls to perform braking to stop, remote parking enters a paused state and a notification is sent to a mobile terminal, and if the mobile terminal side does not restore within preset duration, remote parking enters a terminated state |

For example, in the information domain CAN subnet, an indirect network management algorithm deployed in the central gateway control unit is used to monitor whether communication of the intelligent remote control terminal system and communication of the in-vehicle infotainment system fail. When communication of the intelligent remote control terminal system or the in-vehicle infotainment system fails, the central gateway control unit sends an instruction of braking to stop to the ESP or the EPB to control the vehicle to perform braking to stop. The intelligent remote control terminal system or the in-vehicle infotainment system communicates with another subsystem on a vehicle end through automotive Ethernet backup. The remote parking controller controls to exit remote parking (that is, remote parking enters the terminated state), and sends a notification related to termination of remote parking to the mobile terminal.

In the intelligent driving domain CAN subnet, the indirect network management algorithm deployed in the central gateway control unit is used to monitor whether communication of the remote parking controller fails. When communication of the remote parking controller fails, the central gateway control unit sends the instruction of braking to stop to the ESP or the EPB to control the vehicle to perform braking to stop. The remote parking controller communicates with another subsystem on the vehicle end through the automotive Ethernet backup, works with the another subsystem to exit remote parking, and sends a notification related to termination of remote parking to the mobile terminal.

In the chassis domain CAN subnet, the indirect network management algorithm and the packet byte checksum algorithm that are deployed in the central gateway control unit are used to monitor whether communication of the ESP, EPB, and EPS fails. When communication of at least one of the ESP, the EPB, and the EPS fails, the central gateway control unit sends the parking braking instruction to the motor controller to control the vehicle to perform parking braking. The remote parking controller works with another subsystem to exit remote parking, and sends a notification related to termination of remote parking to the mobile terminal.

In the power domain CAN subnet, the indirect network management algorithm and the packet byte checksum algorithm that are deployed in the central gateway control unit are used to monitor whether communication of the motor controller, the BMS, and the ESM fails. When communication of at least one of the motor controller, the BMS, and the ESM fails, the central gateway control unit sends the instruction of braking to stop to the ESP or the EPB to control the vehicle to perform braking to stop. The remote parking controller works with another subsystem to exit remote parking, and sends a notification related to termination of remote parking to the mobile terminal.

In the body domain CAN subnet, a direct network management algorithm deployed in the central gateway control unit is used to monitor whether communication of the BCM, the DCM, and the PEPS fails. When communication of at least one of the BCM, the DCM, and the PEPS fails, the central gateway control unit sends the instruction of braking to stop to the electronic stability program to control the vehicle to perform braking to stop. The remote parking controller works with another subsystem to exit remote parking, and sends a notification related to termination of remote parking to the mobile terminal.

Further, a vehicle target speed and target acceleration tracking error monitoring algorithm deployed in the remote parking controller is used to determine whether a function of the ESP or the motor controller fails. When a vehicle target speed or target deceleration tracking error exceeds a preset threshold, the central gateway control unit sends the instruction of braking to stop to the EPB to control the vehicle to perform braking to stop. The remote parking controller works with another subsystem to exit remote parking, and sends a notification related to termination of remote parking to the mobile terminal.

In addition, for function failure causes such as the mobile terminal side exiting the remote parking monitoring interface and a virtual key that is of the mobile terminal side and that is used for remote parking being stuck, an APP heartbeat monitoring algorithm deployed in the intelligent remote control terminal system is used to perform function failure detection, and when a function failure is detected, the electronic stability program is notified to perform braking to stop, remote parking enters the paused state, and a notification related to pause of remote parking is sent to the mobile terminal. If the user does not restore the related function within the preset duration, remote parking enters the terminated state.

According to the parking method provided in this embodiment of this application, a functional safety policy of a parking system (especially a long-range remote parking system) is designed and implemented from three aspects: a failure cause, a failure detection method, and a functional safety policy. In addition, a state machine instance of the remote parking system is proposed to ensure that the system safely enters the standby state, the paused state, or the terminated state when a function fails and executes a corresponding functional safety policy in the standby state, the paused state, or the terminated state, so that a normal state of the parking system is decoupled from a protection state during failure. This facilitates a functional safety policy being deployed in the parking system.

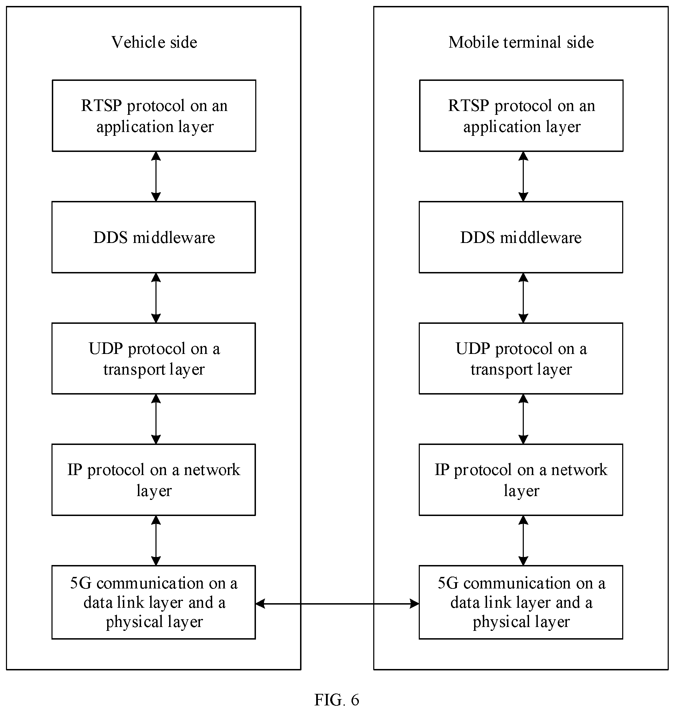

In some possible implementations, communication between the mobile terminal and the vehicle may be implemented by using the communication framework shown in FIG. 6. Application layers of communication systems on the mobile terminal side and the vehicle side use the real time streaming protocol (real time streaming protocol, RTSP), and transport layers use the user datagram protocol (user datagram protocol, UDP), so that a low-latency feature of data transmission can be implemented. In addition, a data distribution service (data distribution service, DDS) middleware is deployed between the application layer and the transport layer, so that high reliability and high security of data transmission can be implemented.

In some possible implementations, an inter-frame vehicle pose matching technology is used to monitor whether communication data between the mobile terminal and the vehicle is abnormal. When it is detected that the data is abnormal, for example, vehicle pose information included in two frames of packets received by the mobile terminal does not meet a vehicle kinematic constraint, the vehicle is controlled to brake.

In some possible implementations, the remote parking controller senses environment information around the vehicle sensed by sensors such as a camera, a lidar, a millimeter-wave radar, and an ultrasonic radar, and processes the environment information around the vehicle to obtain perception fusion output information. For example, the perception fusion output information may include an available parking space, a rasterized obstacle map, dynamic information about an obstacle, and a 360-degree surround view image around the vehicle. When the remote parking controller detects a collision risk, the central gateway control unit sends the instruction of braking to stop to the ESP to control the vehicle to perform braking to stop. The remote parking controller works with another subsystem to exit remote parking, and sends a notification related to termination of remote parking to the mobile terminal.

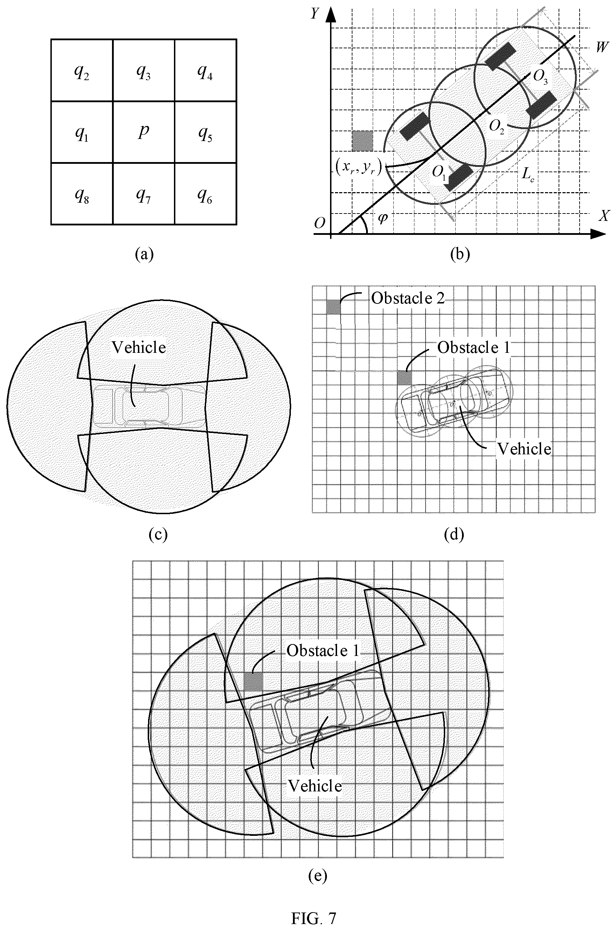

As shown in FIG. 7, a rasterized obstacle map is scanned by using a neighborhood template of a raster grid, to obtain a Euclidean distance and an orientation between each raster grid and a raster grid of a nearest obstacle, and a Euclidean distance and orientation information of the vehicle relative to a nearest obstacle are obtained by using a vehicle multi-circle envelope obstacle detection algorithm.

Specifically, a neighborhood template is formed based on a neighboring grid $q \in \{q_1, q_2, \cdots, q_8\}$ of a raster grid P shown in (a) in FIG. 7, coordinates of the neighboring grid $q \in \{q_1, q_2, \cdots, q_8\}$ relative to a grid of a nearest obstacle are $C(q) = (C_x(q), C_y(q))$, and a square of a Euclidean distance between the neighboring grid $q \in \{\{q_1, q_2, \cdots, q_8\}$ and the grid of the nearest obstacle may be calculated based on the coordinates. It is assumed that the grids of the nearest obstacles of the raster grid P and the neighboring raster $q \in \{\{q_1, q_2, \cdots, q_8\}$ are the same. A deviation $d(p,q)$ of a square of a Euclidean distance and a deviation $M(p,q)$ of relative coordinates between the raster grid P and the neighboring grid $q \in \{\{q_1, q_2, \cdots, q_8\}$ are as follows:

$$d(p,q) = \begin{cases} 2C_x(q) + 1 & if \ q \in \{q_1, q_5\} \\ 2C_y(q) + 1 & if \ q \in \{q_3, q_7\} \\ 2(C_x(q) + C_y(q) + 1) & if \ q \in \{q_2, q_4, q_6, q_8\} \end{cases} \tag{1}$$

$$M(p,q) = \begin{cases} (1,0) & if \ q \in \{q_1, q_5\} \\ (0,1) & if \ q \in \{q_3, q_7\} \\ (1,1) & if \ q \in \{q_2, q_4, q_6, q_8\} \end{cases} \tag{2}$$

$f(q)$ is used to represent the square of the Euclidean distance of the neighboring grid $q \in \{q_1, q_2, \cdots, q_8\}$ relative to the grid of the nearest obstacle, and $f(p)$ and $C(p)$ are used to represent the square of the Euclidean distance and the relative coordinates of the raster grid $p$ relative to the grid of the nearest obstacle. In a raster scanning algorithm, the neighborhood template is used to scan the rasterized obstacle map four times: forward scanning from left to right based on a set $N_1(p) = \{q_1, q_2, q_3, q_4\}$; reverse scanning from right to left based on a set $N_2(p) = \{q_5, q_6, q_7, q_8\}$; forward scanning from top to bottom based on a set $N_3(p) = \{q_3, q_2, q_1, q_8\}$; and reverse scanning from bottom to top based on a set $N_4(p) = \{q_7, q_6, q_5, q_4\}$. In each scanning process, if the square of the Euclidean distance $f(q)$ of the neighboring grid $q \in N_i(p), i = 1,2,3,4$ relative to the grid of the nearest obstacle can reduce the square of the Euclidean distance $f(p)$ of the current raster grid $p$ relative to the nearest grid obstacle, the square of the Euclidean distance $f(p)$ and relative coordinates $C(p)$ of the current raster grid P relative to the grid of the nearest obstacle are updated based on the neighboring grid $q \in N_i(p), i = 1,2,3,4$. After the four times of scanning are completed, a Euclidean distance and an orientation between each raster grid and a raster grid of a nearest obstacle in the rasterized obstacle map can be obtained.

To quickly obtain a Euclidean distance and orientation information of the vehicle relative to a nearest obstacle, as shown in (b) in FIG. 7, three circles (a circle $O_1$, a circle $O_2$, and a circle $O_3$) with a same radius are used to enclose an outer contour of the vehicle, and the Euclidean distance and the orientation between the vehicle and a raster grid of the nearest obstacle are determined based on information about raster grids in which the three circle centers are located in a rasterized obstacle map. Coordinates of the three circle centers can be deduced from a pose $(x_r(k), y_r(k), \varphi(k))$ of a midpoint in a rear axis of the vehicle at a $k$ moment:

$$\begin{bmatrix} x_{O_1}(k) \\ y_{O_1}(k) \end{bmatrix} = \begin{bmatrix} \cos\varphi(k) & -\sin\varphi(k) \\ \sin\varphi(k) & \cos\varphi(k) \end{bmatrix} \begin{bmatrix} L_c/6 - L_r \\ 0 \end{bmatrix} + \begin{bmatrix} x_r(k) \\ y_r(k) \end{bmatrix} \tag{3}$$

$$\begin{bmatrix} x_{O_2}(k) \\ y_{O_2}(k) \end{bmatrix} = \begin{bmatrix} \cos\varphi(k) & -\sin\varphi(k) \\ \sin\varphi(k) & \cos\varphi(k) \end{bmatrix} \begin{bmatrix} L_c/2 - L_r \\ 0 \end{bmatrix} + \begin{bmatrix} x_r(k) \\ y_r(k) \end{bmatrix} \tag{4}$$

$$\begin{bmatrix} x_{O_3}(k) \\ y_{O_3}(k) \end{bmatrix} = \begin{bmatrix} \cos\varphi(k) & -\sin\varphi(k) \\ \sin\varphi(k) & \cos\varphi(k) \end{bmatrix} \begin{bmatrix} 5L_c/6 - L_r \\ 0 \end{bmatrix} + \begin{bmatrix} x_r(k) \\ y_r(k) \end{bmatrix} \tag{5}$$

$L_c$, $W$, and $L_r$ are respectively a length, a width, and a rear overhang of the vehicle.

Further, a 360-degree surround view image shown in (c) in FIG. 7 and a raster layer shown in (d) in FIG. 7 may be fused to obtain a fused image shown in (e) in FIG. 7, and information about the fused image is sent to the mobile terminal side. In some possible implementations, only the obstacle closest to the vehicle may be displayed in the fused image. For example, the raster layer shown in (d) in FIG. 7 includes an obstacle 1 and an obstacle 2, and the obstacle 2 is further away from the vehicle. Considering that in a remote parking process, the obstacle closest to the vehicle poses a higher threat to vehicle safety, only the obstacle 1 closer to the vehicle may be displayed in the fused image.

It may be understood that, a 360-degree surround view image may display information around the vehicle from different angles, so that a visual blind spot of the user in a remote parking process can be eliminated. A Euclidean distance and orientation information of the vehicle relative to an obstacle are obtained by using the vehicle multi-circle envelope obstacle detection algorithm, so that obstacle distance level information can be visualized. In this way, the mobile terminal provides visualized vehicle surrounding environment information and obstacle distance level information for the user. When there is a collision risk in a remote parking process, the user may pause or exit remote parking by using the mobile terminal at any time. This helps ensure safety in a long-range remote parking process.

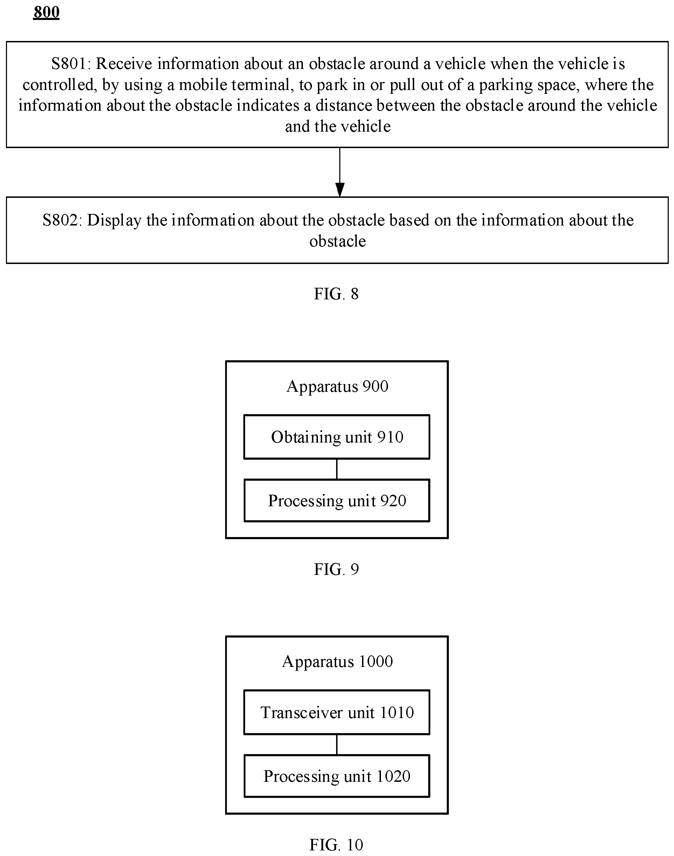

FIG. 8 is another schematic flowchart of a parking method according to an embodiment of this application. The method may be performed by a mobile terminal. The mobile terminal may be the mobile terminal that controls the vehicle to park in or pull out of the parking space in the method 400. The method may include the following steps.

S801: Receive information about an obstacle around a vehicle when the vehicle is controlled, by using the mobile terminal, to park in or pull out of a parking space, where the information about the obstacle indicates a distance between the obstacle around the vehicle and the vehicle.

For example, the vehicle may be the vehicle in the foregoing embodiments, or may be another vehicle in remote parking.

For example, the information about the obstacle may be determined based on the embodiment corresponding to FIG. 7.

S802: Display the information about the obstacle based on the information about the obstacle.

For example, the information about the obstacle may include an image of a surrounding environment of the vehicle, and the image of the surrounding environment includes an image of the obstacle, and/or a distance between the obstacle and the vehicle.

For example, the image of the surrounding environment may be a 360-degree surround view image.

According to the parking method provided in this embodiment of this application, in a process in which a user controls, by using the mobile terminal, the vehicle to park, the mobile terminal can display the information about the obstacle around the vehicle in real time, so that the user can determine an accurate location of the obstacle around the vehicle. This can resolve a problem that a visual blind spot exists in a process in which the user performs parking by using RPA, and the accurate location of the obstacle can enable the user to accurately determine a subsequent parking operation, to improve efficiency of remote parking.

In various embodiments of this application, unless otherwise stated or there is a logic conflict, terms and/or descriptions in different embodiments are consistent and may be mutually referenced, and technical features in various embodiments may be combined based on an internal logical relationship thereof, to form a new embodiment.

The foregoing describes in detail the methods provided in embodiments of this application with reference to FIG. 1 to FIG. 8. With reference to FIG. 9 to FIG. 11, the following describes in detail an apparatus provided in embodiments of this application. It should be understood that descriptions of the apparatus embodiment correspond to the descriptions of the method embodiment. Therefore, for content that is not described in detail, refer to the method embodiment. For brevity, details are not described herein again.

FIG. 9 is a block diagram of a parking apparatus 900 according to an embodiment of this application. The apparatus 900 includes an obtaining unit 910 and a processing unit 920.

The apparatus 900 may include a unit configured to perform the method in FIG. 4. In addition, the units in the apparatus 900 and the foregoing other operations and/or functions are separately used to implement corresponding procedures in the method embodiment in FIG. 4.

When the apparatus 900 is configured to perform the method 400 in FIG. 4, the obtaining unit 910 may be configured to perform S401 in the method 400, and the processing unit 920 may be configured to perform S402 in the method 400.

Specifically, the obtaining unit 910 is configured to: obtain failure indication information when a vehicle is controlled, based on parking control information received from a mobile terminal, to park in or pull out of a parking space, where the failure indication information indicates that at least one of a remote control function of the mobile terminal, a communication network of the vehicle, and a parking-related actuator of the vehicle fails, and the processing unit 920 is configured to control, based on the failure indication information, the vehicle to brake.

Optionally, the communication network includes a first communication network between a remote parking controller and a central gateway control unit, and the processing unit 920 is configured to: when the failure indication information indicates that the first communication network fails, control, through a second communication network between the remote parking controller and the central gateway control unit, the vehicle to brake.

Optionally, the communication network includes a third communication network between an intelligent remote control terminal system and the central gateway control unit, and the processing unit 920 is configured to: when the failure indication information indicates that the third communication network fails, control, through a fourth communication network between the intelligent remote control terminal system and the central gateway control unit, the vehicle to brake.

Optionally, the processing unit 920 is further configured to: when the failure indication information indicates that the remote control function of the mobile terminal fails, control, based on the failure indication information, the vehicle to enter a remote parking paused state; or when the failure indication information indicates that the communication network of the vehicle or the parking-related actuator of the vehicle or both fail, control, based on the failure indication information, the vehicle to enter a remote parking terminated state.

Optionally, after the controlling the vehicle to enter a remote parking paused state, the processing unit 920 is further configured to: control the vehicle to adjust from the remote parking paused state to the remote parking terminated state; or control, based on first indication information, the vehicle to adjust from the remote parking paused state to a remote parking operated state, where the first indication information indicates that the remote control function of the mobile terminal is restored.

Optionally, the obtaining unit 910 is further configured to: send first notification information to the mobile terminal, where the first notification information indicates a remote parking status.

Optionally, the obtaining unit 910 is further configured to: receive braking indication information sent by the mobile terminal in response to a first operation of a user; and the processing unit 920 is further configured to control, based on the braking indication information, the vehicle to brake.

Optionally, before the receiving braking indication information sent by the mobile terminal in response to a first operation of a user, the obtaining unit 910 is further configured to: send information about an obstacle around the vehicle to the mobile terminal, where the information about the obstacle indicates a distance between the obstacle around the vehicle and the vehicle.

Optionally, the processing unit 920 is further configured to: when the distance between the obstacle and the vehicle is less than or equal to a preset distance, control the vehicle to brake.

Optionally, that the remote control function of the mobile terminal fails includes at least one of the following: the mobile terminal exits a monitoring interface, where the monitoring interface is used to display a process in which the vehicle is controlled to park in or pull out of the parking space; a virtual key that is of the mobile terminal and that is used to control the vehicle to park in or pull out of the parking space is stuck; and a key that is of the mobile terminal and that is used to control the vehicle to park in or pull out of the parking space is out of control.

For example, the obtaining unit 910 may include the intelligent remote control terminal system shown in FIG. 3, and the processing unit may include the central gateway control unit shown in FIG. 3.

It should be understood that division into units of the foregoing apparatus is merely logical function division, and during actual implementation, all or some of the units may be integrated into a physical entity, or the units may be physically separated. In addition, the units in the apparatus may be implemented in a form of software invoked by a processor. For example, the apparatus includes a processor, the processor is connected to a memory, the memory stores instructions, and the processor invokes the instructions stored in the memory, to implement any one of the foregoing methods or implement functions of the units in the apparatus. For example, the processor is a general-purpose processor, for example, a CPU or a microprocessor, and the memory is a memory in the apparatus or a memory outside the apparatus. Alternatively, the units in the apparatus may be implemented in a form of a hardware circuit, and functions of some or all of the units may be implemented by designing the hardware circuit. The hardware circuit may be understood as one or more processors. For example, in an implementation, the hardware circuit is an ASIC, and the functions of some or all of the units are implemented by designing a logical relationship between elements in the circuit. For another example, in another implementation, the hardware circuit may be implemented by using a PLD, for example, an FPGA, and the FPGA may include a large quantity of logic gate circuits, and a connection relationship between the logic gate circuits is configured by using a configuration file, to implement the functions of some or all of the foregoing units. All units of the foregoing apparatus may be implemented in a form of software invoked by the processor, or all units may be implemented in a form of the hardware circuit, or some units may be implemented in a form of software invoked by the processor, and a remaining part may be implemented in a form of the hardware circuit.

In this embodiment of this application, the processor is a circuit having a signal processing capability. In an implementation, the processor may be a circuit having a capability of instruction reading and running, for example, a CPU, a microprocessor, a GPU, or a DSP. In another implementation, the processor may implement a specific function based on a logical relationship of a hardware circuit. The logical relationship of the hardware circuit is fixed or reconfigurable. For example, the processor is a hardware circuit implemented by an ASIC or a PLD, for example, an FPGA. In the reconfigurable hardware circuit, a process in which the processor loads a configuration document to implement hardware circuit configuration may be understood as a process in which the processor loads instructions to implement functions of some or all of the foregoing units. In addition, the circuit may be a hardware circuit designed for artificial intelligence, and may be understood as an ASIC, for example, an NPU, a TPU, or a DPU.

It can be learned that each unit in the foregoing apparatus may be one or more processors (or processing circuits) configured to implement the foregoing methods, for example, a CPU, a GPU, an NPU, a TPU, a DPU, a microprocessor, a DSP, an ASIC, an FPGA, or a combination of at least two of these processor forms.

In addition, all or some of the units of the apparatus may be integrated, or may be implemented independently. In an implementation, the units are integrated together and implemented in a form of a system-on-a-chip (system-on-a-chip, SOC). The SOC may include at least one processor, configured to implement any one of the methods or implement functions of the units in the apparatus. Types of the at least one processor may be different, for example, the at least one processor includes a CPU and an FPGA, a CPU and an artificial intelligence processor, or a CPU and a GPU.

In a specific implementation process, the operations performed by the obtaining unit 910 and the processing unit 920 may be performed by a same processor, or may be performed by different processors, for example, separately performed by a plurality of processors. In a specific implementation process, the one or more processors may be processors disposed in the computing platform 150 shown in FIG. 1, or the apparatus 900 may be a chip disposed in the vehicle 100.

FIG. 10 is a block diagram of a parking apparatus 1000 according to an embodiment of this application. The apparatus 1000 includes a transceiver unit 1010 and a processing unit 1020.

The apparatus 1000 may include a unit configured to perform the method in FIG. 8. In addition, the units in the apparatus 1000 and the foregoing other operations and/or functions are separately used to implement corresponding procedures in the method embodiment in FIG. 8.

When the apparatus 1000 is configured to perform the method 800 in FIG. 8, the transceiver unit 1010 may be configured to perform S801 in the method 800, and the processing unit 1020 may be configured to perform S802 in the method 800.

Specifically, the transceiver unit 1010 is configured to: receive information about an obstacle around a vehicle when the vehicle is controlled, by using a mobile terminal, to park in or pull out of a parking space, where the information about the obstacle indicates a distance between the obstacle around the vehicle and the vehicle; and the processing unit 1020 is configured to display information about the obstacle based on the information about the obstacle.

Optionally, the information about the obstacle includes an image of a surrounding environment of the vehicle and/or the distance between the obstacle and the vehicle, where the image of the surrounding environment includes an image of the obstacle.

Optionally, the transceiver unit 1010 is further configured to: receive first notification information sent by the vehicle, where the first notification information indicates that a remote parking status is a remote parking paused state or a remote parking terminated state; and the processing unit 1020 is further configured to display the remote parking status based on the first notification information.

In a specific implementation process, the operations performed by the transceiver unit 1010 and the processing unit 1020 may be performed by a same processor, or may be performed by different processors, for example, separately performed by a plurality of processors. In a specific implementation process, the one or more processors may be processors disposed in the mobile terminal; or the apparatus 1000 may be a chip disposed in the mobile terminal.

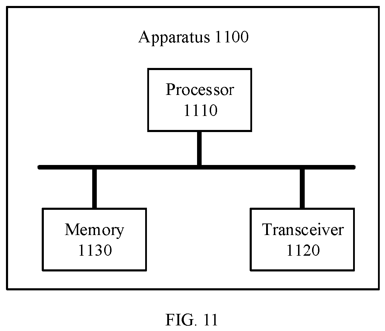

FIG. 11 is a block diagram of a parking apparatus according to an embodiment of this application. The parking apparatus 1100 shown in FIG. 11 may include a processor 1110, a transceiver 1120, and a memory 1130. The processor 1110, the transceiver 1120, and the memory 1130 are connected through an internal connection path. The memory 1130 is configured to store instructions. The processor 1110 is configured to execute the instructions stored in the memory 1130, so that the transceiver 1120 receives/sends some parameters. In some possible implementations, the memory 1130 may be coupled to the processor 1110 by using an interface, or may be integrated with the processor 1110.

It should be noted that the transceiver 1120 may include but is not limited to a transceiver apparatus of an input/output interface (input/output interface) type, to implement communication between the apparatus 1100 and another device or a communication network.

The memory 1130 may be a read-only memory (read-only memory, ROM), a static storage device, a dynamic storage device, or a random access memory (random access memory, RAM).

The transceiver 1120 uses a transceiver apparatus, for example, but not limited to, a transceiver, to implement communication between the apparatus 1100 and another device or a communication network.

In some possible implementations, the apparatus 1100 may be disposed in a mobile terminal, or may be disposed in a vehicle. When the apparatus 1100 is disposed in a vehicle, the apparatus may be disposed in the computing platform 150 shown in FIG. 1.

An embodiment of this application further provides a vehicle. The vehicle may include the apparatus 900 or the apparatus 1100.

An embodiment of this application further provides a mobile terminal. The mobile terminal may include the apparatus 1000 or the apparatus 1100.

An embodiment of this application further provides a parking system. The system may include the apparatus 900 and the apparatus 1000, or the system includes the vehicle and the mobile terminal.

An embodiment of this application further provides a computer program product. The computer program product includes computer program code, and when the computer program code is run on a computer, the computer is enabled to implement the method in embodiments of this application.

An embodiment of this application further provides a computer-readable storage medium. The computer-readable medium stores computer instructions, and when the computer instructions are run on a computer, the computer is enabled to implement the method in embodiments of this application.

An embodiment of this application further provides a chip. The chip includes a circuit, and is configured to perform the method in embodiments of this application.

In an implementation process, steps in the foregoing methods can be implemented by using a hardware integrated logic circuit in a processor, or by using instructions in a form of software. The method disclosed with reference to embodiments of this application may be directly performed by a hardware processor, or may be performed by a combination of hardware and software modules in the processor. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein again.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions of each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may be or may not be physically separate, and parts displayed as units may be or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially or some of the technical solutions may be implemented in a form of a software product. The computer software product is stored in a storage medium and includes several instructions for instructing a computer device (which may be a personal computer, a server, a network device, or the like) to perform all or some of the steps of the method described in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A parking method, comprising:

   obtaining failure indication information when a vehicle is controlled, based on parking control information received from a mobile terminal, to park in or pull out of a parking space, wherein the failure indication information indicates that at least one of a remote control function of the mobile terminal, a communication network of the vehicle, and a parking-related actuator of the vehicle fails; and
   controlling, based on the failure indication information, the vehicle to brake.

2. The method according to claim 1, wherein the communication network comprises a first communication network between a remote parking controller and a central gateway control unit, and the controlling, based on the failure indication information, the vehicle to brake comprises:
   when the failure indication information indicates that the first communication network fails, controlling, through a second communication network between the remote parking controller and the central gateway control unit, the vehicle to brake.

3. The method according to claim 1 or 2, wherein the communication network comprises a third communication network between an intelligent remote control terminal system and the central gateway control unit, and the controlling, based on the failure indication information, the vehicle to brake comprises:
   when the failure indication information indicates that the third communication network fails, controlling, through a fourth communication network between the intelligent remote control terminal system and the central gateway control unit, the vehicle to brake.

4. The method according to any one of claims 1 to 3, wherein the method further comprises:

   when the failure indication information indicates that the remote control function of the mobile terminal fails, controlling, based on the failure indication information, the vehicle to enter a remote parking paused state; or
   when the failure indication information indicates that the communication network of the vehicle or the parking-related actuator of the vehicle or both fail, controlling, based on the failure indication information, the vehicle to enter a remote parking terminated state.

5. The method according to claim 4, wherein after the controlling the vehicle to enter a remote parking paused state, the method further comprises:

   controlling the vehicle to adjust from the remote parking paused state to the remote parking terminated state; or
   controlling, based on first indication information, the vehicle to adjust from the remote parking paused state to a remote parking operated state, wherein the first indication information indicates that the remote control function of the mobile terminal is restored.

6. The method according to claim 4 or 5, wherein the method further comprises:
   sending first notification information to the mobile terminal, wherein the first notification information indicates a remote parking status.

7. The method according to any one of claims 1 to 6, wherein the method further comprises:

   receiving braking indication information sent by the mobile terminal in response to a first operation of a user; and
   controlling, based on the braking indication information, the vehicle to brake.

8. The method according to claim 7, wherein before the receiving braking indication information sent by the mobile terminal in response to a first operation of a user, the method further comprises:
   sending information about an obstacle around the vehicle to the mobile terminal, wherein the information about the obstacle indicates a distance between the obstacle around the vehicle and the vehicle.

9. The method according to any one of claims 1 to 8, wherein that the remote control function of the mobile terminal fails comprises at least one of the following: the mobile terminal exits a monitoring interface, wherein the monitoring interface is used to display a process in which the vehicle is controlled to park in or pull out of the parking space; a virtual key that is of the mobile terminal and that is used to control the vehicle to park in or pull out of the parking space is stuck; and a key that is of the mobile terminal and that is used to control the vehicle to park in or pull out of the parking space is out of control.

10. A parking apparatus, wherein the apparatus comprises an obtaining unit and a processing unit, wherein the obtaining unit is configured to:

    obtain failure indication information when a vehicle is controlled, based on parking control information received from a mobile terminal, to park in or pull out of a parking space, wherein the failure indication information indicates that at least one of a remote control function of the mobile terminal, a communication network of the vehicle, and a parking-related actuator of the vehicle fails; and
    the processing unit is configured to control, based on the failure indication information, the vehicle to brake.

11. The apparatus according to claim 10, wherein the communication network comprises a first communication network between a remote parking controller and a central gateway control unit, and the processing unit is configured to: when the failure indication information indicates that the first communication network fails, control, through a second communication network between the remote parking controller and the central gateway control unit, the vehicle to brake.

12. The apparatus according to claim 10 or 11, wherein the communication network comprises a third communication network between an intelligent remote control terminal system and the central gateway control unit, and the processing unit is configured to: when the failure indication information indicates that the third communication network fails, control, through a fourth communication network between the intelligent remote control terminal system and the central gateway control unit, the vehicle to brake.

13. The apparatus according to any one of claims 10 to 12, wherein the processing unit is further configured to:

    when the failure indication information indicates that the remote control function of the mobile terminal fails, control, based on the failure indication information, the vehicle to enter a remote parking paused state; or
    when the failure indication information indicates that the communication network of the vehicle or the parking-related actuator of the vehicle or both fail, control, based on the failure indication information, the vehicle to enter a remote parking terminated state.

14. The apparatus according to claim 13, wherein after the controlling the vehicle to enter a remote parking paused state, the processing unit is further configured to:

    control the vehicle to adjust from the remote parking paused state to the remote parking terminated state; or
    control, based on first indication information, the vehicle to change from the remote parking paused state to a remote parking operated state, wherein the first indication information indicates that the remote control function of the mobile terminal is restored.

15. The apparatus according to claim 13 or 14, wherein the obtaining unit is further configured to: send first notification information to the mobile terminal, wherein the first notification information indicates a remote parking status.

16. The apparatus according to any one of claims 10 to 15, wherein the obtaining unit is further configured to:

    receive braking indication information sent by the mobile terminal in response to a first operation of a user; and
    the processing unit is further configured to control, based on the braking indication information, the vehicle to brake.

17. The apparatus according to claim 16, wherein before the receiving braking indication information sent by the mobile terminal in response to a first operation of a user, the obtaining unit is further configured to: send information about an obstacle around the vehicle to the mobile terminal, wherein the information about the obstacle indicates a distance between the obstacle around the vehicle and the vehicle.

18. The apparatus according to any one of claims 10 to 17, wherein that the remote control function of the mobile terminal fails comprises at least one of the following: the mobile terminal exits a monitoring interface, wherein the monitoring interface is used to display a process in which the vehicle is controlled to park in or pull out of the parking space; a virtual key that is of the mobile terminal and that is used to control the vehicle to park in or pull out of the parking space is stuck; and a key that is of the mobile terminal and that is used to control the vehicle to park in or pull out of the parking space is out of control.

19. A parking apparatus, comprising:

a memory, configured to store a computer program; and
a processor, configured to execute the computer program stored in the memory, to enable the apparatus to perform the method according to any one of claims 1 to 9.

20. A vehicle, comprising the apparatus according to any one of claims 10 to 19.

21. A computer-readable storage medium, wherein the computer-readable storage medium stores instructions, and when the instructions are executed by a processor, the processor is enabled to implement the method according to any one of claims 1 to 9.

22. A chip, wherein the chip comprises a circuit, and the circuit is configured to perform the method according to any one of claims 1 to 9.

Vehicle 100

Sensing system 120

Computing platform 150

Processor 151

Processor 152

...

Processor 15n

FIG. 1

Vehicle

Ultrasonic sensor

Medium/Short-range radar

Camera

Camera

Camera

Medium/Short-range radar

Camera

Long-range radar

Lidar

FIG. 2

Vehicle

Camera apparatus

Remote parking controller

Intelligent remote control terminal system

In-vehicle infotainment system

Switch    Central gateway control unit

Lidar

Millimeter-wave radar

Ultrasonic controller

Ultrasonic radar

ESP

EPB

EPS

Motor controller

BMS

ESM

BCM

DCM

PEPS

Mobile terminal

— - - —  CAN bus

— - ‥ —  Automotive Ethernet

————  Hard wire

————  Chassis domain CAN subnet

·············  Power domain CAN subnet

— — —  Body domain CAN subnet

·········  Intelligent driving domain CAN subnet

— —  Information domain CAN subnet

·····‥·····  GMSL

FIG. 3

EP 4 613 590 A1

400

S401: Obtain failure indication information when a vehicle is controlled, based on parking control information received from a mobile terminal, to park in or pull out of a parking space, where the failure indication information indicates that at least one of a remote control function of the mobile terminal, a communication network of the vehicle, and a parking-related actuator of the vehicle fails

S402: Control, based on the failure indication information, the vehicle to brake

FIG. 4

FIG. 5

Vehicle side

RTSP protocol on an
application layer

↕

DDS middleware

↕

UDP protocol on a
transport layer

↕

IP protocol on a network
layer

↕

5G communication on a
data link layer and a
physical layer

Mobile terminal side

RTSP protocol on an
application layer

↕

DDS middleware

↕

UDP protocol on a
transport layer

↕

IP protocol on a network
layer

↕

5G communication on a
data link layer and a
physical layer

FIG. 6

| $q_2$ | $q_3$ | $q_4$ |
|-------|-------|-------|
| $q_1$ | $p$   | $q_5$ |
| $q_8$ | $q_7$ | $q_6$ |

(a)

(b)

(c)

(d)

(e)

FIG. 7

**800**

S801: Receive information about an obstacle around a vehicle when the vehicle is controlled, by using a mobile terminal, to park in or pull out of a parking space, where the information about the obstacle indicates a distance between the obstacle around the vehicle and the vehicle

S802: Display the information about the obstacle based on the information about the obstacle

FIG. 8

Apparatus 900

Obtaining unit 910

Processing unit 920

FIG. 9

Apparatus 1000

Transceiver unit 1010

Processing unit 1020

FIG. 10

Apparatus 1100

Processor
1110

Memory
1130

Transceiver
1120

FIG. 11

## INTERNATIONAL SEARCH REPORT

| | International application No. |
|---|---|
| | **PCT/CN2023/103726** |

### A. CLASSIFICATION OF SUBJECT MATTER

B60W30/06(2006.01)i

According to International Patent Classification (IPC) or to both national classification and IPC

### B. FIELDS SEARCHED

Minimum documentation searched (classification system followed by classification symbols)

IPC：B60W

Documentation searched other than minimum documentation to the extent that such documents are included in the fields searched

Electronic data base consulted during the international search (name of data base and, where practicable, search terms used)

CNTXT, ENTXTC, ENTXT, DWPI, CNKI: 泊车, 停车, 遥控, 远程, 失效, 异常, 故障, 制动, 网络, 网关, remote, park+, fail+, brak+

### C. DOCUMENTS CONSIDERED TO BE RELEVANT

| Category* | Citation of document, with indication, where appropriate, of the relevant passages | Relevant to claim No. |
|---|---|---|
| X | CN 113359759 A (CHINA FAW CO., LTD.) 07 September 2021 (2021-09-07) description, pages 4-9, and figures 1-5 | 1, 4-10, 13-22 |
| Y | CN 113359759 A (CHINA FAW CO., LTD.) 07 September 2021 (2021-09-07) description, pages 4-9, and figures 1-5 | 2, 3, 11, 12 |
| Y | CN 112141088 A (SAIC-GM-WULING AUTOMOBILE CO., LTD.) 29 December 2020 (2020-12-29) description, pages 3-9, and figures 1-3 | 2, 3, 11, 12 |
| A | CN 112744214 A (GUANGZHOU CHENGXING ZHIDONG AUTOMOTIVE TECHNOLOGY CO., LTD. et al.) 04 May 2021 (2021-05-04) entire document | 1-22 |
| A | JP 6843209 B1 (MITSUBISHI ELECTRIC CORP.) 17 March 2021 (2021-03-17) entire document | 1-22 |

☐ Further documents are listed in the continuation of Box C. ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **28 September 2023** | **08 October 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/103726**

| Patent document cited in search report | | | Publication date (day/month/year) | Patent family member(s) | | | Publication date (day/month/year) |
|---|---|---|---|---|---|---|---|
| CN | 113359759 | A | 07 September 2021 | None | | | |
| CN | 112141088 | A | 29 December 2020 | None | | | |
| CN | 112744214 | A | 04 May 2021 | None | | | |
| JP | 6843209 | B1 | 17 March 2021 | JP | 2021068198 | A | 30 April 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211522452